# FASCICULE DE BREVET EUROPEEN

(11) **EP 2 462 352 B1**
(45) Date de publication et mention de la délivrance du brevet: **24.12.2014**
(21) Numéro de dépôt: 10735009.2
(22) Date de dépôt: 23.07.2010
(51) Int. Cl.: F04D 29/32, B64C 11/02, F01D 5/02, F01D 21/04

(54) **MOYEU D'HÉLICE À PALES À CALAGE VARIABLE**
PROPELLERNABE FÜR VERSTELLBARE SCHAUFELN
PROPELLER HUB FOR VARIABLE PITCH BLADES

(30) Priorité: 05.08.2009 FR 0955516
(43) Date de publication de la demande: 13.06.2012
(73) Titulaire: Snecma, 75015 Paris (FR)
(72) Inventeur: BOSTON, Eric, Jacques, F-77240 Cesson (FR); BOURU, Michel, André, F-77950 Montereau sur le Jard (FR); JABLONSKI, Laurent, F-77000 Melun (FR); JOLY, Philippe, Gérard, Edmond, F-77000 Vaux le Penil (FR)
(74) Mandataire: Gevers France
(86) Numéro de dépôt international: PCT/EP2010/060743
(87) Numéro de publication internationale: WO 2011/015475

(56) Documents cités:
- FR-A1- 2 641 251
- US-A- 5 224 831
- US-A- 5 713 721

## Description

La présente invention concerne un moyeu d'hélice à pales à calage variable pour une turbomachine du type à soufflante non carénée (en anglais « open rotor » ou « unducted fan »).

La soufflante d'une turbomachine de ce type comprend typiquement deux hélices externes coaxiales et contrarotatives, respectivement amont et aval, qui sont chacune entraînées en rotation par une turbine de la turbomachine et qui s'étendent sensiblement radialement à l'extérieur de la nacelle de cette turbomachine.

Chaque hélice comprend un moyeu comportant un élément de rotor de la turbine et un anneau polygonal fixé audit élément de rotor et présentant des logements cylindriques sensiblement radiaux répartis autour de l'axe longitudinal de la turbomachine et dans lesquels sont les pales de l'hélice.

Les pales peuvent tourner dans les logements de l'anneau polygonal et sont entraînées en rotation autour des axes des pales par des moyens appropriés de façon à régler le calage angulaire des pales, et à l'optimiser en fonction des conditions de fonctionnement de la turbomachine.

En fonctionnement, les pales de l'hélice sont soumises à des forces centrifuges très importantes pouvant atteindre 30 000 daN, ces forces étant transmises à l'anneau polygonal. En cas de rupture de l'anneau polygonal, les pales pourraient se libérer, causant des dommages structuraux très importants autour de la turbomachine.

L'invention a notamment pour but d'apporter une solution simple, efficace et économique à ce problème.

Elle a pour objet un moyeu d'hélice du type précité intégrant une sécurité contre les défaillances de l'anneau polygonal.

Une sécurité fonctionnellement semblable est divulguée par le document FR 2 641 251 A1.

La présente invention propose à cet effet un moyeu d'hélice à pales à calage variable pour une turbomachine, le moyeu comportant un élément de rotor de turbine de la turbomachine, un anneau polygonal fixé audit élément de rotor et présentant des logements cylindriques sensiblement radiaux répartis autour d'un axe central de l'anneau pour recevoir lesdites pales, et une pluralité de membres de rétention de secours liés à l'élément de rotor, traversant radialement l'anneau par des évidements dans ledit anneau. et présentant chacun au moins une surface d'appui opposée à une surface extérieure de l'anneau avec un écart radial.

En cas de rupture ou déformation radiale vers l'extérieur de l'anneau polygonal, la surface extérieure de l'anneau contactera ladite surface d'appui, et le membre de rétention de secours reprendra l'effort radial, assurant ainsi au moins la rétention de l'anneau et limitant ainsi les dégâts potentiels de cette défaillance.

Plus particulièrement chaque membre de rétention de secours comporte une tête élargie avec une surface d'appui de chaque côté dudit évidement.

Avantageusement, chaque membre de rétention de secours comporte un pied avec une forme par exemple en queue d'aronde en engagement positif avec une rainure complémentaire dans l'élément de rotor. Ainsi, la rétention radiale du membre de rétention est assurée de manière simple et efficace.

Eventuellement ledit pied comporte aussi un orifice radial recevant un boulon pour limiter le déplacement du pied par rapport à l'élément de rotor dans la direction de ladite rainure. Conformément à un autre mode de réalisation, un jonc annulaire d'arrêt est agencé entre le pied et l'élément de rotor pour limiter le déplacement du pied par rapport à l'élément de rotor dans la direction de ladite rainure.

Des détails concernant l'invention sont décrits ci-après en faisant référence aux dessins.
La figure 1 illustre une turbomachine du type à hélices non carénées.
La figure 2 illustre en perspective un anneau polygonal de rétention de pales d'hélices non carénées d'un moyeu d'hélice suivant un mode de réalisation de l'invention.
La figure 3 montre une vue de face de l'anneau polygonal de la figure 2 avec plusieurs membres de rétention de secours.
La figure 4 montre une coupe dans le plan IV-IV de la figure 3.

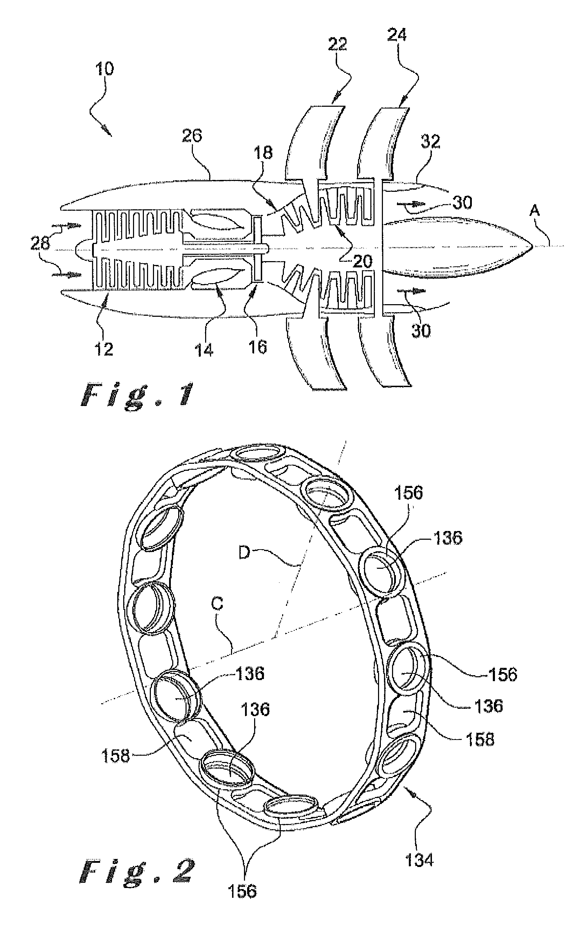

On se réfère d'abord à la figure 1 qui représente une turbomachine 10 à soufflante non carénée (en anglais « open rotor » ou « unducted fan ») qui comporte d'amont en aval, dans le sens d'écoulement des gaz à l'intérieur de la turbomachine, un compresseur 12, une chambre annulaire de combustion 14, une turbine haute pression 16, et deux turbines basse pression 18, 20 qui sont contrarotatives, c'est-à-dire qu'elles tournent dans deux sens opposés autour de l'axe longitudinal A de la turbomachine.

Chacune de ces turbines aval 18, 20 est solidaire en rotation d'une hélice externe 22, 24 s'étendant radialement à l'extérieur de la nacelle 26 de la turbomachine, cette nacelle 26 étant sensiblement cylindrique et s'étendant le long de l'axe A autour du compresseur 12, de la chambre de combustion 14, et des turbines 16, 18 et 20.

Le flux d'air 28 qui pénètre dans la turbomachine est comprimé puis est mélangé à du carburant et brûlé dans la chambre de combustion 14, les gaz de combustion passant ensuite dans les turbines pour entraîner en rotation les hélices 22, 24 qui fournissent la majeure partie de la poussée générée par la turbomachine. Les gaz de combustion sortant des turbines sont expulsés à travers une tuyère 32 (flèches 30) pour augmenter la poussée.

Les hélices 22, 24 sont disposées coaxialement l'une derrière l'autre et comportent une pluralité de pales régulièrement réparties autour de l'axe A de la turbomachine. Ces pales s'étendent sensiblement radialement et sont du type à calage variable, c'est-à-dire qu'elles peuvent tourner autour de leurs axes de façon à optimiser leur position angulaire en fonction des conditions de fonctionnement de la turbomachine.

Chaque hélice comprend un anneau polygonal qui s'étend autour de l'axe A et qui comporte une pluralité de logements radiaux sensiblement cylindriques dans lesquels sont engagés des moyens de montage des pales de l'hélice. Un tel anneau polygonal 134 est illustré sur la figure 2. Il comprend des logements cylindriques 136 sensiblement radiaux et présentant des parois cylindriques 156 et une pluralité d'évidements 158 régulièrement répartis autour de l'axe central C de l'anneau et formés dans l'anneau pour l'alléger. Chaque évidement 158 est situé entre deux logements radiaux 136 consécutifs.

Toutefois, un tel anneau polygonal 134 forme un point de défaillance critique pour la turbomachine. En cas de rupture de l'anneau polygonal 134 ou de sa liaison avec la turbine, les pales d'hélice pourraient se libérer et, impulsées par les forces centrifuges, générer des dommages très importants autour de la turbomachine. Des mesures doivent donc être prises pour prévenir ce risque.

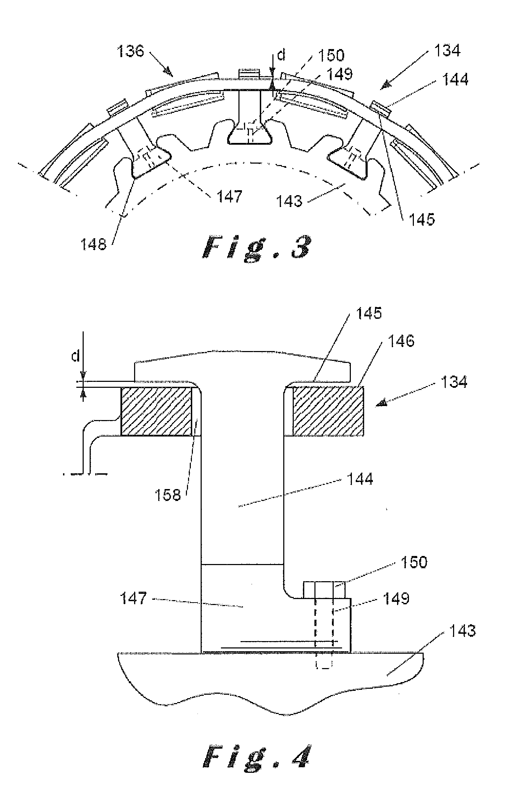

Un moyeu d'hélice suivant un premier mode de réalisation de l'invention est illustré sur la figure 3. Dans ce moyeu d'hélice, l'anneau 134 est fixé à un élément de rotor de turbine 143 par des moyens non illustrés. Afin d'assurer la rétention de l'anneau 134, ou de segments détachés de celui-ci, en cas de rupture de l'anneau ou de ces moyens de fixation, une pluralité de membres de rétention de secours 144, distribués dans la circonférence de l'anneau 134, sont aussi fixés à l'élément de rotor 143 et traversent radialement l'anneau 134 à travers les évidements 158 pour présenter des surfaces d'appui 145 opposées à des surfaces extérieures 146 de l'anneau 134 avec un écart radial d.

On voit sur la figure 4 que le membre de rétention de secours 144 présente une tête élargie dans une direction parallèle à l'axe C, de manière à présenter une telle surface d'appui 145 face aux surfaces extérieures 146 de l'anneau 134 de chaque côté de l'évidement 158.

À sa base, chaque membre de rétention de secours 144 comporte un pied 147 en queue d'aronde. Ce pied en queue d'aronde 147 est en engagement positif avec une rainure 148 complémentaire dans l'élément de rotor 143, de manière à retenir le membre 144 dans une direction radiale. Dans le mode de réalisation illustré, la rainure 148 est orientée dans une direction parallèle à l'axe C. Toutefois, d'autres orientations perpendiculaires à ladite direction radiale pourraient éventuellement être envisagées suivant les circonstances et les contraintes d'espace imposées par l'assemblage et désassemblage de la turbomachine. Par exemple, la rainure pourrait être orientée tangentiellement à une circonférence centrée dans l'axe C.

Le pied 147 comporte aussi au moins un orifice 149 pour recevoir un boulon 150 permettant de limiter ou éviter un déplacement du pied 147 par rapport à l'élément de rotor dans la direction de la rainure 148. Selon un autre mode de réalisation non représenté, un jonc annulaire d'arrêt est agencé entre le pied (147) et l'élément de rotor (143) pour limiter le déplacement du pied (147) par rapport à l'élément de rotor (143) dans la direction de ladite rainure (148).

En fonctionnement normal, comme les surfaces d'appui 145 présentent un écart radial d par rapport aux surfaces extérieures 146 de l'anneau 134, aucun effort n'est transmis de l'anneau 134 à l'élément de rotor 143 à travers les membres de rétention de secours 144. Tous les efforts de l'anneau 134 vers l'élément de rotor 143 sont transmis par ses moyens normaux de fixation. Toutefois, en cas de rupture ou déformation radiale sensible de l'anneau 234 et/ou de ses moyens de fixation à l'élément de rotor 143, des surfaces extérieures 146 de l'anneau 134 contactent les surfaces d'appui 145 des membres de rétention de secours 144, lesquels reprennent au moins une partie des efforts radiaux de rétention d'au moins une section de l'anneau 134. De cette manière, les membres de rétention de secours 144 offrent une sécurité additionnelle contre la rupture du moyeu d'hélice suivant l'invention.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. Par conséquent, la description et les dessins doivent être considérés dans un sens illustratif plutôt que restrictif.

## Revendications

1. Moyeu d'hélice à pales à calage variable pour une turbomachine, comportant :
• un élément de rotor (143) de turbine de la turbomachine,
• un anneau polygonal (134) fixé audit élément de rotor et présentant des logements cylindriques (136) sensiblement radiaux répartis autour d'un axe central (C) de l'anneau (134) pour recevoir lesdites pales,
- une pluralité de membres de rétention de secours (144) liés à l'élément de rotor (143) et présentant chacun au moins une surface d'appui (145) opposée à une surface extérieure (146) de l'anneau (134) avec un écart radial (d), le moyeu étant **caractérisé par le fait que** les membres de rétention traversent radialement l'anneau (134) par des évidements (158) dans ledit anneau (134).

2. Moyeu selon la revendication 1, dans lequel chaque membre de rétention de secours (144) comporte une tête élargie avec une surface d'appui (145) de chaque côté dudit évidement (158).

3. Moyeu selon une quelconque des revendications précédentes, dans lequel chaque membre de rétention de secours (144) comporte un pied (147) en queue d'aronde en engagement positif avec une rainure (148) complémentaire dans l'élément de rotor (143).

4. Moyeu selon la revendication 3, dans lequel ledit pied comporte aussi au moins un orifice (149) recevant un boulon (150) pour limiter le déplacement du pied (147) par rapport à l'élément de rotor (143) dans la direction de ladite rainure (148).

5. Moyeu selon la revendication 3 dans lequel un jonc annulaire d'arrêt est agencé entre le pied (147) et l'élément de rotor (143) pour limiter le déplacement du pied (147) par rapport à l'élément de rotor (143) dans la direction de ladite rainure (148).

6. Hélice (22,24) comportant un moyeu selon une quelconque des revendications précédentes, et des pales reçues dans les logements cylindriques (136).

7. Turbomachine (10) comportant au moins une hélice (22,24) selon la revendication 6.

8. Turbomachine(10) comportant deux hélices (22,24) contrarotatives selon la revendication 6.

## Patentansprüche

1. Propellernabe mit Schaufeln mit variabler Verkeilung für eine Turbomaschine, die Folgendes aufweist:
• ein Turbinenrotorelement (143) der Turbomaschine,
• einen polygonalen Ring (134), der an dem Rotorelement befestigt ist und zylindrische Aufnahmen (136) aufweist, die im Wesentlichen radial um eine zentrale Achse (C) des Rings (134) verteilt sind, um die Schaufeln aufzunehmen,
• eine Mehrzahl von Hilfshalteelementen (144), die mit dem Rotorelement (143) verbunden sind und jeweils mindestens eine Auflageoberfläche (145) aufweisen, die einer äußeren Oberfläche (146) des Rings (134) mit einem radialen Abstand (d) entgegengesetzt ist, wobei die Nabe **dadurch gekennzeichnet ist, dass** die Halteelemente den Ring (134) radial durch Aussparungen (158) in dem Ring (134) durchqueren.

2. Nabe nach Anspruch 1, bei der jedes Halteelement (144) einen Kopf aufweist, der mit einer Auflageoberfläche (145) auf jeder Seite der Aussparung (158) vergrößert ist.

3. Nabe nach einem der vorhergehenden Ansprüche, bei der jedes Halteelement (144) einen Fuß (147) in Schwalbenschwanzform in schlüssigem Eingriff mit einer komplementären Rille (148) in dem Rotorelement (143) umfasst.

4. Nabe nach Anspruch 3, bei der der Fuß auch mindestens eine Öffnung (149) aufweist, die einen Bolzen (150) aufnimmt, um die Verlagerung des Fußes (147) in Bezug auf das Rotorelement (143) in die Richtung der Rille (148) zu begrenzen.

5. Nabe nach Anspruch 3, bei der ein Drehsprengring zwischen dem Fuß (147) und dem Rotorelement (143) eingerichtet ist, um die Verlagerung des Fußes (147) in Bezug auf das Rotorelement (143) in die Richtung der Rille (148) zu begrenzen.

6. Propeller (22, 24), der eine Nabe nach einem der vorhergehenden Ansprüche aufweist, und Schaufeln, die in den zylindrischen Aufnahmen (136) aufgenommen sind.

7. Turbomaschine (10), die mindestens einen Propeller (22, 24) nach Anspruch 6 aufweist.

8. Turbomaschine (10), die zwei in entgegengesetzte Richtung drehende Propeller (22, 24) nach Anspruch 6 aufweist.

## Claims

1. A propeller hub for a turbomachine with variable pitch blades, including:
• a turbomachine turbine rotor element (143),
• a polygonal ring (134) fixed to said rotor element and having substantially radial cylindrical housings (136) distributed around a central axis (C) of the ring (134) to receive said blades,
• a plurality of backup retaining members (144) connected to the rotor element (143), and each having at least one bearing surface (145) opposite an exterior surface (146) of the ring (134) with a radial spacing (d), the hub being **characterized by** the fact that the backup retaining members pass radially through the ring (134) through openings (158) in said ring (134).

2. The hub as claimed in claim 1, wherein each backup retaining member (144) includes an enlarged head with a bearing surface (145) on each side of said opening (158).

3. The hub as claimed in either of the preceding claims, wherein each backup retaining member (144) includes a dovetail-shape base (147) positively interengaged with a complementary groove (148) on the rotor element (143).

4. The hub as claimed in claim 3, wherein said base also includes at least one orifice (149) receiving a bolt (150) for limiting movement of the base (147) relative to the rotor element (143) in the direction of said groove (148).

5. The hub as claimed in claim 3, wherein an annular stop ring is disposed between the base (147) and the rotor element (143) to limit movement of the base (147) relative to the rotor member (143) in the direction of said groove (148).

6. A propeller (22, 24) including a hub according to any one of the preceding claims and blades received in the cylindrical housings (136).

7. A turbomachine (10) including at least one propeller (22, 24) as claimed in claim 6.

8. A turbomachine (10) including two contrarotating propellers (22, 24) as claimed in claim 6.
